# EUROPÄISCHE PATENTANMELDUNG

(11) **EP 3 263 486 A1**
(43) Veröffentlichungstag der Anmeldung: **03.01.2018**
(21) Anmeldenummer: 17182882.5
(22) Anmeldetag: 01.07.2013
(51) Int. Cl.: B65D 85/804

(54) **PORTIONSKAPSEL MIT EINER KENNUNG ZWISCHEN ZWEI FOLIENLAGEN EINER VERSCHLUSSMEMBRANE**

(30) Priorität: 29.06.2012 DE 102012105790; 19.06.2013 DE 102013211568
(62) Teilanmeldung aus: 13736523.5
(71) Anmelder: K-fee System GmbH, 51469 Bergisch Gladbach (DE)
(72) Erfinder: KRÜGER, Marc, 51467 Bergisch Gladbach (DE); EMPL, Günter, 51429 Bergisch Gladbach (DE)
(74) Vertreter: Loock, Jan Pieter

(57) **Zusammenfassung**

Die vorliegende Erfindung betrifft eine Portionskapsel zur Herstellung eines Getränks mit einem Basiselement, das einen Hohlraum aufweist, in dem ein Getränkerohmaterial vorgesehen ist und der von einer Membran verschlossen wird, die an dem Basiselement befestigt ist, wobei sie eine Kennung aufweist, die es ermöglicht die jeweilige Portionskapsel zu individualisieren.

## Beschreibung

Die vorliegende Erfindung betrifft eine Portionskapsel zur Herstellung eines Getränks mit einem Basiselement, das einen Hohlraum aufweist, in dem ein Getränkerohmaterial vorgesehen ist und der von einer Membran verschlossen wird, die an dem Basiselement befestigt ist, wobei sie eine Kennung aufweist, die es ermöglicht, die jeweilige Portionskapsel zu individualisieren.

Derartige Portionskapseln sind hinlänglich bekannt und werden in einer Vielzahl von Ausführungsformen am Markt angeboten und werden dazu eingesetzt Kaffee, Espresso, Cappuccino, Tee, Milch- oder Kakao-Getränke aber auch sonstige Getränke oder Lebensmittel wie Suppen herzustellen. Um in einem Automaten hergestellt werden zu können, müssen diese Kapseln alle dieselbe äußere Form haben, wobei sich das jeweilige Herstellungsverfahren unterscheidet. Beispielsweise kann sich die Wassermenge und/oder die Temperatur, die zur Herstellung des jeweiligen Getränks eingesetzt wird, unterscheiden. Des Weiteren kann das Wasser der Portionskapsel kontinuierlich oder intermittierend durch die Portionskapsel geleitet werden. Die Automaten, die zur Herstellung des jeweiligen Getränks oder Lebensmittels eingesetzt werden, müssen in regelmäßigen Abständen gereinigt werden, wozu Reinigungskapseln zur Verfügung stehen, deren äußere Maße zu den Maßen der Portionskapseln identisch sind und die ebenfalls von Wasser durchströmt wird, nachdem sie in den Automat eingeführt worden ist, das die Reinigungssubstanz aus den Kapseln löst und mit der Lösung die Brühkammer des Automaten und die stromabwärtigen Leitungen reinigt. Dabei ist es unbedingt zu vermeiden, dass ein Benutzer, beispielsweise ein Kind oder ein sehbehinderter Erwachsener die Reinigungskapsel zur Herstellung eines Getränkes einsetzt und dieses konsumiert.

Es war deshalb die Aufgabe der vorliegenden Erfindung, eine Portionskapsel zur Verfügung zu stellen, die die Nachteile des Standes der Technik nicht aufweist.

Gelöst wird die Aufgabe mit einer Portionskapsel zur Herstellung eines Getränks mit einem Basiselement, das einen Hohlraum aufweist, in dem ein Getränkerohmaterial vorgesehen ist und der von einer Membran verschlossen wird, die an dem Basiselement befestigt ist, wobei die Portionskapsel eine Kennung aufweist, die es ermöglicht die jeweilige Portionskapsel zu individualisieren, wobei die Kennung auf der Innenseite des Basiselementes und/oder der Membran vorgesehen ist.

Die zu diesem Gegenstand der vorliegenden Erfindung gemachte Offenbarung gilt für die anderen Gegenstände der vorliegenden Erfindung gleichermaßen und umgekehrt.

Die vorliegende Erfindung betrifft eine Portionskapsel zur Herstellung eines Getränkes oder Lebensmittels, welches einen Hohlraum aufweist, in dem ein Getränkerohmaterial vorgesehen ist. Eine derartige Portionskapsel wird beispielsweise aus Kunststoff, einem Naturstoff und/oder einem biologisch abbaubaren Werkstoff hergestellt und weist ein Basiselement, insbesondere ein geformtes, vorzugsweise tiefgezogenes, oder ein durch Spitzen hergestelltes Basiselement, auf, das vorzugsweise kegelstumpfförmig oder zylindrisch geformt ist und einen Boden aufweist. In den Hohlraum der Portionskapsel wird das Getränkerohmaterial eingefüllt, das beispielsweise von einer Flüssigkeit, insbesondere Wasser, extrahiert und/oder aufgelöst wird. Vorzugsweise wird das Basiselement nach dem Einfüllen des Getränkerohmaterials, insbesondere mit einer Membran, verschlossen. Die Membran ist vorzugsweise dem Boden des Basiselementes gegenüberliegend vorgesehen. Die Membran kann aus demselben oder einem unterschiedlichen Werkstoff wie das Basiselement gefertigt sein und wird vorzugsweise durch Siegeln und/oder Kleben an dem Basiselement befestigt. Die Membran kann gas- und/oder flüssigkeitsdicht ausgebildet oder gas- und/oder flüssigkeitsdurchlässig ausgebildet sein. Des Weiteren können in dem Hohlraum ein oder mehrere Einbauelemente, wie beispielsweise ein Filter, ein Flüssigkeitsverteiler, ein Vlies, ein Filz, eine Absperrfolie und/oder dergleichen vorgesehen werden. Für den Fall, dass ein Filz und ein Vlies vorgesehen sind, sind diese vorzugsweise miteinander verbunden. Der Filz und/oder das Vlies können mehrlagig vorgesehen werden, wobei sich die Lagen in der Art des verwendeten Ausgangsmaterials und/oder dessen Verarbeitung unterscheiden können. Die Membran und/oder der Boden können mit mehreren Ausnehmungen (Löchern) versehen sein.

Erfindungsgemäß ist weiterhin vorgesehen, dass diese Portionskapsel eine Kennung aufweist, die es ermöglicht, die jeweilige Portionskapsel zu individualisieren.

Individualisieren im Sinne der Erfindung bedeutet vorzugsweise, dass die jeweilige Portionskapsel einer Gruppe zugeordnet werden kann, die für die Herstellung eines Getränks oder Lebensmittels oder zur Reinigung des Automaten geeignet ist. Es ist nicht nötig, dass die Kennung offenbart, um welche Portionskapsel es sich speziell handelt, d.h. eine Seriennummer oder Chargennummer oder dergleichen enthält, sondern lediglich die Klassierung der jeweilige Portionskapsel zu einer Gruppe von Portionskapseln erlaubt, beispielsweise Getränk-/Lebensmittelportions- oder Reinigungskapsel. Vorzugsweise erlaubt die Kennung zusätzlich die Differenzierung zwischen den einzelnen Getränke und/oder Lebensmittelart, beispielsweise, dass es sich um eine Kapsel handelt, mit der Tee, Kaffee, ein Milchgetränk oder dergleichen oder eine Suppe hergestellt werden kann.

Vorzugsweise erfasst ein an einem Automaten, beispielsweise Kaffeeautomaten, vorgesehener Sensor/Detektionsmittel diese Kennung und vergleicht sie vorzugsweise mit einer abgespeicherten Kennung. Vorzugsweise ist der Automat nur dann in Betrieb zu nehmen, insbesondere seine, das Wasser zur Verfügung stellende Druckpumpe, wenn die ermittelte Kennung mit der Referenzkennung einer Getränk-/Lebensmittelportionskapsel übereinstimmt. Andernfalls ist der Kaffeeautomat nicht in Betrieb zu nehmen, weil zu befürchten ist, dass es sich um eine Reinigungskapsel handelt, in der sich beispielsweise ein Reinigungsmittel befindet. In diesem Fall kann der Automat beispielsweise nur dann in Betrieb genommen werden, wenn vorher eine bestimmte Tastenkombination auf dem Bedienfeld des Automaten gedrückt worden ist, mit der der Benutzer verifiziert, dass ihm bekannt ist, dass es sich um eine Reinigungskapsel handelt. Dadurch wird sicher vermieden, dass eine Reinigungskapsel versehentlich zur Getränkeherstellung verwendet wird.

Die Kennung kann alternativ oder zusätzlich dazu dienen, dass der Kaffeeautomat ein bestimmtes Programm fährt, d. h. beispielsweise das Wasser auf eine bestimmte Temperatur heizt, mit einem bestimmten Druck zur Verfügung stellt und/oder eine bestimmte Wassermenge durch die Portionskapsel fördert.

Alternativ oder zusätzlich dient die Kennung zum Sortieren der Materialien aus dem die Portionskapsel hergestellt ist bei einem späteren Entsorgungs- und/oder Recycling-Prozess.

Erfindungsgemäß ist die Kennung auf der Innenseite des Basiselementes und/oder der Innenseite der Membran, d.h. in dem Hohlraum vorgesehen. Dadurch ist die Kennung vor Beschädigung und/oder Manipulation geschützt.

Vorzugsweise ist die Kennung auf und/oder in einem Film, d. h. einer Folie, insbesondere einer Kunststofffolie, die vorzugsweise eine lebensmittelrechtliche Zulassung aufweist, vorgesehen, die mit dem Basiselement und/oder der Membran auf deren Innenseite verbunden wird, nachdem dieses geformt, beispielsweise tiefgezogen oder durch Spritzen/Spritzgießen hergestellt, worden ist und/oder während diese geformt oder durch Spritzen/Spritzgießen hergestellt wird. Dadurch kann die Kennung auf dem Film aufgebracht werden, bevor diese mit dem Basiselement der Portionskapsel verbunden wird. Diese kann dann mit der Portionskapsel verbunden werden, ohne dass die Kennung beschädigt oder ihr Informationsgehalt unleserlich wird.

Vorzugsweise erfolgt der Verbund zwischen dem Basiselement und/oder der Membran und dem Film, der die Kennung aufweist kraft- und/oder formschlüssig. Alternativ oder zusätzlich besteht ein Stoffschluss zwischen dem Basiselement und dem Film, beispielsweise durch Kleben oder Siegeln.

Vorzugsweise befindet sich die Kennung auf der der Portionskapsel zugewandten Seite, so dass sie sich nach dem Vorsehen der Folie an der Membran oder dem Basiselement zwischen der Membran bzw. dem Basiselement und der Folie befindet. Dadurch ist die Kennung durch die Folie geschützt.

Die Kennung kann aber auch an der Membran vorgesehen werden, beispielsweise indem eine Folie, an der die Kennung vorgesehen ist, mit der Membran verbunden wird. Vorzugsweise befindet sich die Kennung dann zwischen zwei Folienschichten.

Die Folie, an der die Kennung vorgesehen ist, kann aber auch eine von mehreren Schichten sein, aus der die Membran oder das Basiselement hergestellt ist. Vorzugsweise befindet sich die Kennung dann zwischen zwei Folienschichten.

Vorzugsweise ist die Folie mehrlagig ausgeführt werden und die Kennung befindet sich besonders bevorzugt zwischen zwei Folienlagen.

Vorzugsweise wird die Kennung durch Drucken auf die Folie oder eine Schicht der Folie aufgetragen.

Gemäß einem weiteren oder einem bevorzugten Gegenstand der vorliegenden Erfindung ist die Kennung auf die innere Oberfläche des Basiselementes oder einer Membran oder zwischen zwei Folienlagen der Membran und/oder des Basiselementes aufgetragen, beispielsweise durch Drucken oder ein sonstiges Auftragsverfahren.

Die zu diesem Gegenstand der vorliegenden Erfindung gemachte Offenbarung gilt für die anderen Gegenstände der vorliegenden Erfindung gleichermaßen und umgekehrt.

Erfindungsgemäß oder vorzugsweise ist demnach die Kennung auf die Membran oder das Basiselement, beispielsweise als zusätzliche Schicht oder Zwischenschicht, aufgetragen. Diese Schicht ist vorzugsweise ringförmig oder kreisförmig vorgesehen, erstreckt sich demnach vorzugsweise nur lokal jedoch um den gesamten inneren Umfang des Basiselementes herum und/oder ist vorzugsweise als Kreisring oder als Kreis auf der Membran vorgesehen.

Die Kennung kann beispielsweise mit einer Düse aufgetragen oder mit einem Pinsel oder durch Drucken, insbesondere mit einer Druckwalze oder dergleichen beispielsweise auf den inneren Umfang des Basiselementes oder auf der Membran oder auf eine Folienlagen der Membran und/oder des Basiselementes aufgetragen werden.

Vorzugsweise weist das Basiselement der Portionskapsel mindestens einen Ring, der insbesondere parallel zu dem Boden und/oder dem Flansch der Portionskapsel verläuft und der den Kraft- und/oder Formschluss zwischen dem Film, der die Kennung aufweist, und dem Basiselement der Portionskapsel verbessert. Vorzugsweise sind mehrere parallele Ringe vorgesehen.

Vorzugsweise erstreckt sich der Film um den gesamten inneren Umfang des Basiselementes, aber besonders bevorzugt nicht entlang dessen gesamter Länge. Vorzugsweise ist der Film als Zylindermantel- oder Kegelstumpffläche vorgesehen. Die Kennung erstreckt sich vorzugsweise um den gesamten inneren und/oder äußeren Umfang des Films. Vorzugsweise ist die Kennung kreisringförmig vorgesehen.

Vorzugsweise handelt es sich bei der Kennung um Flächenbereiche mit einer bestimmten optischen Eigenschaft, beispielsweise Reflexionseigenschaft und/oder Fluoreszenzeigenschaft und/oder Phosphoreszenzeigenschaft, die von einem Sensor erkennbar ist. Dieser Flächenbereich ist auf dem Film mit der Kennung vorgesehen, der an dem Basiselement und/oder der Membran vorgesehen ist. Vorzugsweise weist der Film mit der Kennung, das Basiselement und/oder die Membran mindestens zwei Bereiche auf, die sich in ihren optischen Eigenschaften, beispielsweise den Reflexionseigenschaften und/oder Fluoreszenzeigenschaften und/oder Phosphoreszenzeigenschaften, unterscheiden.

Bei der Kennung kann es sich beispielsweise um ein optisch erkennbares Material, beispielsweise eine fluoreszierende und/oder phosphoreszierende Substanz, handeln. Weiterhin kann es sich um eine Kennung in Form einer Metallschicht oder Ferrometallschicht bzw. in Form von Metall- oder Ferrometallstreifen handeln.

Eine fluoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende elektromagnetische Strahlung. Bei einer Kennung, die auf einer fluoreszierenden Substanz basiert, empfängt ein Sensor die freiwerdende Strahlung und eine angeschlossene Steuerung vergleicht das Profil und/oder die Intensität dieser Strahlung mit einem hinterlegten Profil. Sind diese zumindest teilweise identisch weiß die angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Vorzugsweise weist die freiwerdende Strahlung mindestens ein, besonders bevorzugt mehrere Maxima auf. Der Sensor bzw. die angeschlossene Steuerung untersuchen dann, ob mindestens eines dieser Maxima bei der empfangenen Strahlung vorhanden ist.

Eine phosphoreszierende Substanz im Sinne der Erfindung besteht aus mindestens einem Molekül, mit mindestens einem Elektronen, das angeregt durch elektromagnetische Strahlung vorzugsweise aus seinem Orbital herausgelöst und in ein vorzugsweise leeres, unbesetztes Orbital mit einem höheren Energiegehalt gehoben wird. Dieser angeregte Zustand ist in der Regel nicht stabil, so dass das Elektron wieder in sein ursprüngliches Orbital zurückfällt und seine Energie wird zumindest teilweise in Form von elektromagnetischer Strahlung frei. Diese freiwerdende elektromagnetische Strahlung ist vorzugsweise langwelliger als die anregende Strahlung. Bei einer phosphoreszierenden Substanz endet die Strahlungsemission jedoch nicht mit dem Ende der Bestrahlung sondern klingt über einen längeren Zeitraum ab als dies bei der Fluoreszenz der Fall ist. Bei einer Kennung, die auf einer phosphoreszierenden Substanz basiert, empfängt ein Sensor, der in oder an dem Automaten vorgesehen ist die freiwerdende Strahlung und eine angeschlossene Steuerung vergleicht dieses Abklingprofil mit einem hinterlegten Abklingprofil oder Profilabschnitt. Vorzugsweise wird die Intensität dieser Strahlung, insbesondere bei einer bestimmten Frequenz, mit einem hinterlegten Abklingprofil und/oder einem bestimmten Wert verglichen. Sind diese zumindest teilweise identisch weiß der angeschlossene Steuerung, dass es sich um eine Portions- und nicht um eine Reinigungskapsel handelt und gibt den Automaten frei. Alternativ oder zusätzlich erkennt die Steuerung um was für eine Portionskapsel es sich handelt, beispielsweise Tee, Kaffee, Milch oder dergleichen und steuert den Automaten entsprechend. Der Sensor bzw. die angeschlossene Steuerung untersucht nach welcher Zeitspanne die ursprüngliche Intensität der Strahlung um einen bestimmten Prozentsatz abgeklungen ist und vergleicht den gemessen Wert mit einem hinterlegten Wert. Alternativ oder zusätzlich wird untersucht wie hoch die Intensität der Strahlung, insbesondere bei einer bestimmten Frequenz, nach einer bestimmten Zeitspanne ist und dieser Wert wird mit einem hinterlegten Wert verglichen. Stimmt der hinterlegte mit dem gemessenen Wert überein, gibt die Steuerung den Automaten frei oder wählt ein bestimmtes Zubereitungsprogramm für das jeweilige Getränk oder Lebensmittel. Stimmt der Wert nicht überein, kann der Automat nur unter bestimmten Voraussetzungen in Betrieb genommen werden, da zu es dann um eine Reinigungskapsel handeln könnte.

Die fluoreszierende und/oder phosphoreszierende Substanz wird mit einer bestimmten elektromagnetischen Strahlung angestrahlt und während und/oder nachdem die Strahlung ausgeschaltet worden ist, wird die Fluoreszenz und/oder Phosphoreszenz gemessen. Die Strahlung kann mit einer Wellenlänge oder mehreren Wellenlängen erfolgen. Die Strahlung kann eine oder mehrere Quellen, die gleichzeitig oder nacheinander zum Einsatz kommen, umfassen.

Es können ein oder mehrere Sensoren die von der fluoreszierende und/oder phosphoreszierende Substanz emittierte Strahlung analysieren. Der Sensor ist vorzugsweise in dem Automaten, beispielsweise dessen Brühkammer oder im Bereich des Einwurfschachtes vorgesehen.

Die Substanz wird auf das Basiselement oder die Membran oder auf eine Folienschicht des Basiselementes oder der Membran aufgetragen, beispielsweise aufgedruckt. Das Substrat für die Kennung hat vorzugsweise eine FDA-Zulassung.

Des weiteren kann Membran und/oder das Basiselement noch einen Dekordruck aufweisen. Dieser Dekordruck kann, bezogen auf die Sichtseite der Portionskapsel vor der Substanz der Kennung vorgesehen sein.

In einer weiteren bevorzugten Ausführungsform ist die Kennung ein elektrisch leitender Bereich, der auf oder in dem Film, dem Basiselement und/oder der Membran vorgesehen wird. Durch diesen elektrisch leitenden Bereich wird in einem, wie auch immer gestalteten Stromkreis eine messbare Veränderung bewirkt, die dann zur Erkennung der jeweiligen Portionskapsel führt und/oder der elektrisch leitende Bereich wird von einem Sensor erkannt. Zur Unterscheidung der jeweiligen Portionskapseln können diese durch den Film/die Folie und/oder den Auftrag eine unterschiedliche Leitfähigkeit aufweisen, die durch einen Sensor, beispielsweise ein Ohmmeter, erkannt wird.

In einer weiteren bevorzugten Ausführungsform ist die Kennung ein magnetischer, insbesondere ferromagnetischer Bereich, der auf dem Film vorgesehen ist oder auf das Basiselement und/oder die Membran aufgebracht ist.

In einer weiteren bevorzugten Ausführungsform ist die Kennung ein RFID (Radio frequency identification). Dieser RFID wird an der Membran und/oder dem Basiselement vorgesehen, insbesondere befestigt, besonders bevorzugt stoffschlüssig mit diesem verbunden. Vorzugsweise handelt es sich bei dem RFID um einen gedruckten RFID. Dieser RFID kann an der Innenseite des Basiselements oder der Membran vorgesehen, insbesondere aufgedruckt sein. Der RFID, insbesondere der gedruckte RFID, befindet sich vorzugsweise zwischen zwei Schichten der Folie des Basiselementes und/oder der Membran und/oder einer Folie, die an der Innenseite der Portionskapsel vorgesehen wird. Vorzugsweise wird der RFID auf einem kreisringförmigen Materialsegment, insbesondere Foliensegment, zur Verfügung gestellt, das mit dem Flansch des Basiselementes verbunden wird. Dieser Verbund kann durch Siegeln oder Kleben erfolgen. Es ist aber auch ein Formschluss zwischen dem Materialsegment und dem Basiselement denkbar. Der RFID kann aber auch ein Kreis- und/oder kreisringförmiges Gebilde auf der Innenseite der Membran und/oder in der Membran sein.

In einer bevorzugten Ausführungsform erfolgt der Verbund zwischen dem Materialsegment, auf dem der RFID vorgesehen ist, beim Tiefziehen des Basiselementes, indem das Materialsegment dabei entweder gleichzeitig, vorher oder nachher an dem Basiselement oder dem Material, aus dem das Basiselement gefertigt wird, befestigt, vorzugsweise gesiegelt wird. Alternativ erfolgt der Verbund zwischen dem Material auf dem der RFID vorgesehen ist und einer weiteren Folienschicht durch Laminierung.

Vorzugsweise wird der RFID auf einer Kunststofffolie vorgesehen und aus dieser ausgeschnitten, vorzugsweise ausgestanzt. Beispielsweise wird ein kreisringförmiges Segment von der Folie abgetrennt. Der RFID kann vorher auf die Kunststofffolie kaschiert und/oder aufgedruckt worden sein.

Vorzugsweise wird der RFID gleichzeitig mit einem Dekordruck auf die Innenseite der Portionskapsel aufgetragen, alternativ vor Anbringung des Dekordrucks oder danach.

In einer bevorzugten Ausführungsform wird die Kennung durch ein Pigment, beispielsweise ein Farbpigment und/oder Floreszenzpigment und/oder Phosphoreszenzpigment erzielt, das in oder auf dem Film oder auf der Innenseite des Basiselements oder der Membran vorgesehen ist.

Vorzugsweise ist die Kennung eine Substanz, die beispielsweise durch einen Energieeintrag aktiviert oder verändert werden kann.

Mit der erfindungsgemäßen Portionskapsel ist es möglich, zu verhindern, dass mit einer Reinigungskapsel versehentlich ein Getränk hergestellt wird. Weiterhin ist es anhand der Kennung möglich, dass der Automat erkennt, welche Art von Kapsel sich in seiner Brühkammer befindet und den Getränke- oder Lebensmittelherstellungsprozess, d. h. beispielsweise die Menge an Wasser, deren Druck und/oder deren Temperatur, entsprechend einstellt.

Gemäß einem bevorzugten Gegenstand der vorliegenden Erfindung ist im Bodenbereich durch Materialabtrag, beispielsweise mittels eines Lasers, eine Schwächung vorgesehen. Diese Schwächung ist insbesondere in dem Bereich des Bodens der Kapsel vorgesehen, der für die Herstellung des Getränkes von einem Dorn durchstochen wird. Dadurch dass die Folie im Bereich des Dorns, beispielsweise durch Materialabtrag mittels eines Lasers, geschwächt ist, ist der Kraftaufwand, der zum Durchstoßen der Folie benötigt wird, geringer. Der Dorn eines entsprechenden Kaffeeautomaten kann eine Kraftbegrenzung, beispielsweise in Form einer Feder, aufweisen, die die Kraft begrenzt, mit der der Dorn gegen den Portionskapselboden drücken kann. Dadurch wird vermieden, dass Kapseln, die eine entsprechende Schwächung nicht aufweisen, in einem entsprechenden Kaffeeautomaten zum Einsatz kommen können.

Gemäß einem bevorzugten Gegenstand der vorliegenden Erfindung weist die Portionskapsel einen Randbereich auf, der vorzugsweise an dem Basiselement vorgesehen ist. Vorzugsweise ist der Rand an dem dem Boden gegenüberliegenden Bereich des Basiselementes vorgesehen. An diesem Randbereich kann beispielsweise eine Membran zum Verschließen des Basiselementes angeordnet werden, nachdem das Rohmaterial in die Portionskapsel eingefüllt ist. Der Rand kann aber auch dazu dienen, die Kapsel in einem Einwurfschacht so zu führen, dass sie in einer ganz bestimmten Lage in eine Brühkammer fällt oder Brühkammer in einer ganz bestimmten Lage zugeführt wird. Gleichzeitig kann der Rand als Anschlags- und/oder Dichtungsfläche dienen.

Ein weiterer bevorzugter Gegenstand der vorliegenden Erfindung ist eine Portionskapsel zur Herstellung eines Getränks, aufweisend ein im Wesentlichen kegelstumpfförmiges oder zylindrisches Basiselement, welches einen Hohlraum zur Aufnahme eines Getränkerohmaterials aufweist, und eine den Hohlraum verschließende Membran, wobei das Basiselement einen Wandungsbereich aufweist und das Basiselement ferner auf der der Membran abgewandten Seite der Portionskapsel einen Bodenbereich aufweist, wobei der Wandungsbereich eine Mehrzahl von Rillen aufweist und die Rillen zwischen der Membran und dem Bodenbereich über wenigstens einen Teil der Höhenerstreckung des Wandungsbereichs verlaufend vorgesehen sind und insbesondere parallel zueinander und parallel zu dem Bodenbereich vorgesehen sind. Diese Rillen verbessern vorzugsweise den Verbund zwischen der Portionskapsel und dem Film, der die Kennung aufweist.

Diese Portionskapsel hat gegenüber der Portionskapsel gemäß dem Stand der Technik beispielsweise den Vorteil, dass der Wandungsbereich des Basiselements durch die Mehrzahl von Rillen versteift ist. Dies hat zum einen den Vorteil, dass die Portionskapsel eine höhere mechanische Stabilität aufweist und somit eine Deformation und insbesondere ein seitliches Einknicken der Portionskapsel verhindert wird. Ein weiterer Vorteil der erfindungsgemäßen Portionskapsel ist, dass sich durch die Anordnung von Rillen im Wandungsbereich des Basiselements ein verbessertes Verhalten beim Durchströmen der Portionskapsel mit der Extraktionsflüssigkeit in der Brühkammer ergibt, weil es durch die Anordnung der Rillen, insbesondere durch ihren Verlauf zwischen der Membran und dem Bodenbereich über wenigstens einen Teil der Höhenerstreckung des Wandungsbereichs, möglich ist, die Qualität und die Zuverlässigkeit des Extraktionsvorgangs erheblich zu steigern. Insbesondere ist es erfindungsgemäß vorteilhaft möglich, dass durch die Erhöhung der mechanischen Stabilität durch die Verwendung der Mehrzahl von Rillen die Materialstärke des Basiselements insgesamt reduziert werden kann. Die Produktion der Portionskapsel wird somit erheblich kostengünstiger und umweltfreundlicher. Andererseits wird in der Brühkammer durch die Mehrzahl der Rillen eine Anhaftung des Wandungsbereichs an die Brühkammerwandung reduziert bzw. vermieden, wodurch das Auswerfen oder Entnehmen der Portionskapsel aus der Brühkammer begünstigt wird. Ein weiterer Vorteil der Mehrzahl von Rillen ist, dass innerhalb des Hohlraums die Strömung der Extraktionsflüssigkeit entlang des Basisbereichs durch die Rillenstruktur im Wandungsbereich optimiert gestaltet werden kann, so dass sich durch Formgebung der Rillenstruktur beispielsweise eine bessere bzw. stärkere Verwirbelung der Extraktionsflüssigkeit im Hohlraum oder aber eine gleichmäßigere (laminare) Strömung der Extraktionsflüssigkeit ergibt bzw. mit einfachen Mitteln realisiert werden kann. Eine im Vergleich zum Stand der Technik stärkere Verwirbelung der Extraktionsflüssigkeit im Hohlraum hat gegenüber dem Stand der Technik den Vorteil, dass sich keine ungewollten und zufälligen Hauptflüssigkeitsströme durch das Bett des Getränkerohmaterials bilden, sondern stattdessen das Getränkerohmaterial in seinem gesamten Volumen durchströmt wird. Der Extraktionsvorgang wird somit wesentlich effizienter und ist präziser zu steuern bzw. reproduzierbarer.

Das Getränkerohmaterial umfasst insbesondere Kaffeepulver (vorzugsweise gemahlenen Röstkaffee), Schokoladenpulver, Milchpulver, Tee oder dergleichen. Alternativ ist denkbar, dass das Getränkerohmaterial ein Getränkeextrakt, wie beispielsweise Instant-Kaffee, umfasst.

Vorzugsweise weist das Basiselement einen Absatz auf, der sich besonders bevorzugt an einen Flansch anschließt, wobei das Basiselement im Bereich des Absatzes einen größeren Durchmesser aufweist als im Wandungsbereich zwischen dem Absatz und dem Bodenbereich. Hierdurch ergibt sich in vorteilhafter Weise eine besonders einfache und robuste Möglichkeit, eine Stapelbarkeit der Portionskapseln bzw. eine Stapelbarkeit des Basiselements der Portionskapseln herbeizuführen.

Ferner ist es erfindungsgemäß auch bevorzugt vorgesehen, dass innerhalb des Hohlraums ein Filterelement angeordnet ist, welches den Hohlraum in einen ersten Bereich zur Ordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial und/oder ein Filzmaterial umfasst.

Ein weiterer Gegenstand der vorliegenden Erfindung ist die Verwendung einer erfindungsgemäßen Portionskapsel zur Herstellung eines Heißgetränks.

Die zu diesem Gegenstand der vorliegenden Erfindung gemachte Offenbarung gilt für die anderen Gegenstände der vorliegenden Erfindung gleichermaßen und umgekehrt.

Ein weiterer Gegenstand der vorliegenden Erfindung ist ein Verfahren zur Herstellung einer Portionskapsel, bei dem der Film, der die Kennung aufweist, beim Tiefziehen oder Spritzen, insbesondere Kunststoffspritzen, des Basiselementes mit diesem verbunden wird.

Die zu diesem Gegenstand der vorliegenden Erfindung gemachte Offenbarung gilt für die anderen Gegenstände der vorliegenden Erfindung gleichermaßen und umgekehrt.

Vorzugsweise wird der Film, insbesondere als Ring, mit einem Stempel eines Tiefziehwerkzeugs verbunden, mit dem anschließend das Basiselement tiefgezogen wird. Alternativ wird der Film in eine Form eingelegt, in die das Material des Basiselementes eingespritzt wird. Beim Aushärten des Materials verbindet sich der Film insbesondere stoffschlüssig mit dem Material aus dem das Basiselement gefertigt ist.

Vorzugsweise wird der Film als geschlossener Ring zur Verfügung gestellt.

Vorzugsweise wird der Film als Schlauch zur Verfügung gestellt.

Vorzugsweise wird der Film an das Basiselement gesiegelt oder geklebt.

Vorzugsweise weist der Film Enden auf, die miteinander verbunden werden. Dies kann vor der Verbindung mit dem Basiselement, dabei oder danach erfolgen.

Ein weiterer bevorzugter oder erfindungsgemäßer Gegenstand der vorliegenden Erfindung ist ein Verfahren zur Herstellung einer Portionskapsel, bei dem die Kennung auf die Membran oder nach dem Tiefziehen oder Spritzen auf der Innenseite des Basiselementes vorgesehen wird.

Die zu diesem Gegenstand der vorliegenden Erfindung gemachte Offenbarung gilt für die anderen Gegenstände der vorliegenden Erfindung gleichermaßen und umgekehrt.

Vorzugsweise wird die Kennung auf die Membran oder das Basiselement aufgetragen, beispielsweise aufgesprüht oder aufgestrichen.

Alternativ oder zusätzlich erfolgt das Anbringen der Kennung an der Portionskapsel oder der Folie durch Energieeintrag, insbesondere mit einem Laser und/oder durch Belichtung. Dadurch kann Material von der Folie, der Membran oder der Portionskapsel abgetragen und/oder deren optische, mechanische oder sonstige physikalische Eigenschaften verändert werden.

Vorzugsweise werden das Basiselement und/oder die Membran für das Vorsehen der Kennung gedreht. Besonders bevorzugt wird das Basiselement in der Tiefziehform oder Spritzform gedreht.

Vorzugsweise erfolgt der Auftrag der Kennung mit einer Vielzahl von Düsen, die beispielsweise in dem Tiefziehwerkzeug oder Spritzwerkzeug vorgesehen sein können.

Noch ein weiterer oder bevorzugter Gegenstand der vorliegenden Erfindung ist ein Verfahren, bei dem die Kennung vor nach dem Verschließen der Portionskapsel auf das Basiselement und/oder die Membran oder eine Folienschicht der Membran oder des Basiselementes aufgetragen, insbesondere gedruckt wird.

Sowohl die Kennung als auch der Film sind vorzugsweise aus einem Material hergestellt, das eine lebensmittelrechtliche Zulassung hat, d.h. mit Lebensmitteln in Kontakt kommen darf.

Gemäß einem weiteren oder einem bevorzugten Gegenstand der vorliegenden Erfindung ist die Kennung auf die innere, d.h. dem Hohlraum zugewandte Oberfläche des Basiselementes oder einer Membran aufgetragen.

Die zu diesem Gegenstand der vorliegenden Erfindung gemachte Offenbarung gilt für die anderen Gegenstände der vorliegenden Erfindung gleichermaßen und umgekehrt.

Erfindungsgemäß oder vorzugsweise ist demnach die Kennung auf die Membran oder das Basiselement, beispielsweise als zusätzliche Schicht, aufgetragen. Diese Schicht ist vorzugsweise ringförmig vorgesehen, erstreckt sich demnach vorzugsweise nur lokal jedoch um den gesamten Umfang des Basiselementes herum und/oder ist vorzugsweise als Kreisring auf der Membran vorgesehen.

Die Kennung wird beispielsweise aufgetragen, nachdem das Basiselement geformt, vorzugsweise tiefgezogen, oder spritzgegossen worden ist.

Vorzugsweise weist die Portionskapsel einen Randbereich und/oder Flansch auf, der an dem Basiselement vorgesehen ist.

Gemäß einem bevorzugten Gegenstand der vorliegenden Erfindung ist im Bodenbereich, durch Materialabtrag, beispielsweise mittels eines Lasers, eine Schwächung vorgesehen. Diese Schwächung ist insbesondere in dem Bereich des Bodens der Kapsel vorgesehen, der für die Herstellung des Getränkes von einem Dorn durchstochen wird. Dadurch, dass die Folie im Bereich des Dorns beispielsweise durch Materialabtrag mittels eines Lasers geschwächt ist, ist der Kraftaufwand, der zum Durchstoßen der Folie benötigt wird, geringer. Der Dorn eines entsprechenden Kaffeeautomaten kann eine Kraftbegrenzung beispielsweise in Form einer Feder aufweisen, die die Kraft begrenzt mit der der Dorn gegen den Portionskapselboden drücken kann. Dadurch wird vermieden, dass Kapseln die eine entsprechende Schwächung nicht aufweisen in einem entsprechenden Kaffeeautomaten zum Einsatz kommen können.

Die Kennung wird vorzugsweise an dem Basiselement angebracht, nachdem dieses geformt, d.h. beispielsweise tiefgezogen oder durch Spritzgießen hergestellt worden ist.

Gemäß einem weiteren erfindungsgemäßen oder bevorzugten Gegenstands der vorliegenden Erfindung ist es vorgesehen, dass innerhalb des Hohlraums ein Filterelement angeordnet ist, welches den Hohlraum in einen ersten Bereich zur Anordnung des Getränkerohmaterials und in einen zweiten Bereich zur Aufnahme eines Getränkeextrakts unterteilt, wobei es besonders bevorzugt vorgesehen ist, dass das Filterelement ein Vliesmaterial und/oder ein Filzmaterial umfasst. Vorzugsweise ist dieses Material mit dem Boden, der Wandung und/oder dem Rand verbunden, insbesondere durch Siegeln oder Kleben verbunden.

Die zu diesem Gegenstand der vorliegenden Erfindung gemachte Offenbarung gilt für die anderen Gegenstände der vorliegenden Erfindung gleichermaßen und umgekehrt.

Vorzugsweise weist das Filterelement die Kennung auf, beispielsweise indem das Material, aus dem das Filterelement gefertigt ist, mit der Kennung, beispielsweise einem elektrisch leitenden oder magnetischen Material, versehen ist. Diese Substanz kann beispielsweise Bestandteile des Materials aus dem das Filterelement gefertigt sein. Beispielsweise kann die Kennung Bestandteil der Fäden sein, aus dem das Vlies oder das Filz gefertigt wird. Das Filterelement und/oder das Material, aus dem das Filterelement gefertigt wird, kann aber auch mit der Kennung beschichtet sein.

Ein weiterer Gegenstand der vorliegenden Erfindung ist die Verwendung einer erfindungsgemäßen Portionskapsel zur Herstellung eines Heißgetränks.

Die zu diesem Gegenstand der vorliegenden Erfindung gemachte Offenbarung gilt für die anderen Gegenstände der vorliegenden Erfindung gleichermaßen und umgekehrt.

Ein weiterer Gegenstand der vorliegenden Erfindung ist ein Verfahren zur Herstellung der erfindungsgemäßen Portionskapsel, bei dem der Film als Ring in das Basiselement eingeführt wird.

Die zu diesem Gegenstand der vorliegenden Erfindung gemachte Offenbarung gilt für die anderen Gegenstände der vorliegenden Erfindung gleichermaßen und umgekehrt.

Noch ein weiterer Gegenstand der vorliegenden Erfindung ist ein Verfahren zur Herstellung einer Portionskapsel, bei dem der Film auf die Membran oder beim oder nach dem Tiefziehen oder beim oder nach dem Spritzen/Spritzgießen auf dem Basiselement vorgesehen wird.

Die zu diesem Gegenstand der vorliegenden Erfindung gemachte Offenbarung gilt für die anderen Gegenstände der vorliegenden Erfindung gleichermaßen und umgekehrt. Vorzugsweise wird zum Tiefziehen ein Stempel eingesetzt wird und der Film wird an dem Stempel, beispielsweise am Umfang des Stempels vorgesehen. Beim Tiefziehen wird der Film dann vorzugsweise mit dem Basiselement verbunden.

Vorzugsweise wird der Film als geschlossener Ring zur Verfügung gestellt. Vorzugsweise wird der Film als Schlauch zur Verfügung gestellt.

Der Film kann aber auch beim oder nach einem Spitzen/Spritzgießen des Basiselementes mit diesem verbunden werden.

Vorzugsweise wird der Film an das Basiselement oder die Membran gesiegelt oder geklebt.

Vorzugsweise weist der Film Enden auf, die miteinander verbunden werden. Dies kann vor der Verbindung mit dem Basiselement, dabei oder danach erfolgen.

Ein weiterer bevorzugter oder erfindungsgemäßer Gegenstand der vorliegenden Erfindung ist ein Verfahren zur Herstellung einer Portionskapsel, bei dem die Kennung auf die Membran oder nach dem Tiefziehen oder Spritzen/Spritzgießen auf dem Basiselement vorgesehen wird.

Die zu diesem Gegenstand der vorliegenden Erfindung gemachte Offenbarung gilt für die anderen Gegenstände der vorliegenden Erfindung gleichermaßen und umgekehrt.

Vorzugsweis wird die Kennung auf die Membran oder das Basiselement aufgetragen, beispielsweise aufgesprüht oder aufgestrichen.

Alternativ oder zusätzlich erfolgt das Anbringen der Kennung an der Portionskapsel oder dem Film durch Energieeintrag, insbesondere mit einem Laser. Dadurch kann Material von der Folie, der Membran oder dem Basiselement abgetragen und/oder deren optische Eigenschaften verändert werden.

Vorzugsweis werden das Basiselement und/oder die Membran für das Vorsehen der Kennung gedreht. Besonders bevorzugt wird das Basiselement in der Tiefziehform/Spitzform gedreht.

Vorzugsweis erfolgt der Auftrag der Kennung mit mindestens einer Düse aufgetragen. Die Düse(n) kann/können in dem Stempel vorgesehen sein. Alternativ oder zusätzlich kann sich die Portionskapsel beim Anbringen der Kennung drehen.

Im Folgenden wird die Erfindung anhand der Figuren 1 - 5 erläutert. Diese Erläuterungen schränken den allgemeinen Erfindungsgedanken nicht ein. Die Erläuterungen gelten für alle Gegenstände der vorliegenden Erfindung gleichermaßen.
Figuren 1 und 2 zeigt eine Portionskapsel mit einer Kennung auf einer Folie.
Figur 3 zeigt die Folie als Schlauch.
Figur 4 zeigt einen Folienring, dessen Enden verbunden wurden.
Figur 5 zeigt ein Verfahren zum Aufbringen der Kennung.

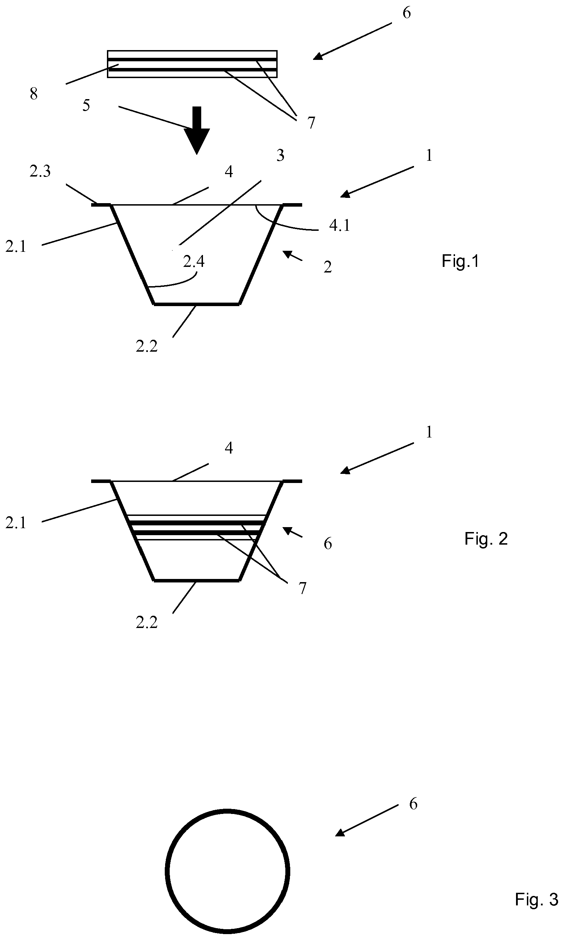

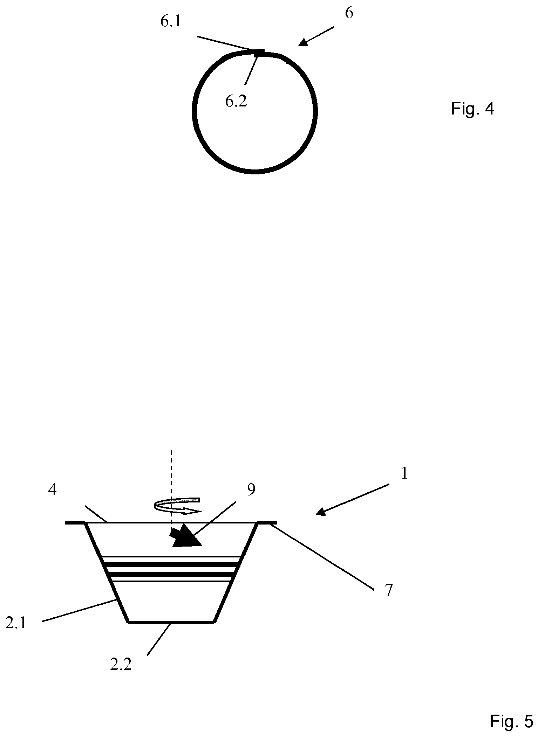

Figuren 1 und 2zeigen eine Portionskapsel 1, die ein Basiselement 2 mit einer Wandung 2.1 und einem Bodenbereich 2.2 aufweist. Die Wandung 2.1 und der Boden 2.2 definieren einen Hohlraum 3, in dem ein Getränkerohmaterial und ggf. ein Einbauelement vorgesehen werden können. Dieser Hohlraum wird nach dessen Befüllung vorzugsweise von einer Membran verschlossen, die vorzugsweise mit dem Randbereich 2.4 des Basiselements beispielsweise durch Siegeln oder Kleben verbunden wird. Diese Kaffeeportionskapsel wird in eine Brühkammer eingeführt, in der sie von einer Flüssigkeit, beispielsweise Wasser, durchströmt wird. Dabei wird das Getränkerohmaterial extrahiert oder aufgelöst und dadurch das gewünschte Getränk erzeugt. Erfindungsgemäß weist diese Portionskapsel nun eine Kennung 7 auf, mit der feststellbar ist, ob die jeweilige Portionskapsel für die Herstellung eines Getränks oder Lebensmittels geeignet ist. Ist dies nicht der Fall, können sich signifikante Gesundheitsprobleme ergeben. Beispielsweise kann durch den Einsatz einer Reinigungskapsel ein für den Benutzer ungenießbare wässrige Lösung hergestellt werden. Die gilt es zu vermeiden. Erfindungsgemäß ist diese Kennung 7 an einem Film 6 , insbesondere einer Kunststofffolie vorgesehen, der, nachdem die Portionskapsel geformt worden ist, wie durch den Pfeil 5 dargestellt, in das Basiselement eingeführt und mit der Innenseite 2.4 des Basiselements 2 der Portionskapsel verbunden wird. In dem vorliegenden Fall ist die Kennung 7 mindestens einen vorzugsweise zwei Streifen, die sich in ihrer elektrischen Leitfähigkeit und/oder in ihren magnetischen Eigenschaften von dem Material des Films und/oder von dem Material des Basiselementes der Portionskapsel unterscheiden. Beispielsweise hat die Kennung eine andere Leitfähigkeit oder andere magnetische Eigenschaften als mindestens eines der beiden Materialien und/oder der Bereich 8 zwischen zwei Kennungen 7. Vorzugsweise erstreckt sich der Film 6 um den gesamten Umfang des Basiselementes. Besonders bevorzugt erstreckt sich jede Kennung 7 um den gesamten äußeren Umfang des Films/Filmrings 6. Nachdem der Film im Hohlraum 3 des Basiselementes vorgesehen worden ist, wird er mit diesem verbunden. Die Kennung kann auf den Film appliziert oder eingebracht werden oder als Teil des Films, d.h. untrennbar mit diesem verbunden, vorgesehen sein. Der Fachmann erkennt, dass die in Figur 2 dargestellte Kennung auch durch einen Farbauftrag erfolgen kann, was anhand von Figur 5 beispielhaft beschrieben ist.Der Fachmann erkennt außerdem, dass die Kennung alternativ oder zusätzlich auch auf der Innenseite 4.1. der Membran 4 vorgesehen sein kann.

Den Figuren 3 und 4 kann entnommen werden, dass der Film als Schlauch zur Verfügung gestellt werden kann, der auf die gewünschte Länge abgelängt wird (Figur 3). Die Kennung wird beispielsweise auf den Film aufgetragen oder der Film wird aus zwei Materialien hergestellt, wobei eines die Kennung, beispielsweise eine andere elektrische Leitfähigkeit als der Rest aufweist. Alternativ werden die Enden 6.1, 6.2 des Films nach dessen Herstellung miteinander verbunden. Dies kann erfolgen bevor der Film an dem Basiselement angebracht wird, beim Anbringen oder nach dem Anbringen. Die Enden 6.1, 6.2 können aber auch auf Stoß oder mit einem Abstand zueinander vorsehen werden.

In Figur 5 ist noch eine Ausführungsform der erfindungsgemäßen Portionskapsel in einer Seitenansicht dargestellt. In dem vorliegenden Fall ist die Kennung 7 auf der Innenseite des Basiselementes aufgetragen. Die Kennung ist kreisringförmig und wird in dem vorliegenden Fall durch eine Düse 9 aufgetragen, die sich beim Auftrag dreht. Alternativ oder zusätzlich kann sich auch die Portionskapsel beim Auftrag der Kennung drehen.

### Bezugszeichenliste:

- 1: Portionskapsel
- 2: Basiselement
- 2.1: Wandung
- 2.2: Bodenbereich
- 2.3: Randbereich, Flansch
- 2.4: Innenseite Basiselement
- 3: Hohlraum
- 4: Membran
- 4.1: Innenseite der Membran
- 5: Relativbewegung
- 6: Ring, Filmring

- 6.1: Ende des Rings
- 6.2: Ende des Rings

- 7: Kennung, Farbkranz, Barcode
- 8: Bereich neben einer Kennung
- 9: Düse

## Patentansprüche

1. Portionskapsel (1) zur Herstellung eines Getränks mit einem Basiselement (2), das einen Hohlraum (3) aufweist, in dem ein Getränkerohmaterial vorgesehen ist und der von einer Membran (4) verschlossen wird, die an dem Basiselement befestigt ist, wobei sie eine Kennung (7) aufweist, die es ermöglicht die jeweilige Portionskapsel zu individualisieren, wobei die Kennung (7) zwischen zwei Folienlagen der Membran vorgesehen ist, **dadurch gekennzeichnet, dass** es sich bei der Kennung um Flächenbereiche mit einer bestimmten optischen Reflexionseigenschaft handelt.

2. Portionskapsel (1) nach Anspruch 1, **dadurch gekennzeichnet, dass** sie einen Randbereich und/oder Flansch (2.3) aufweist, der an dem Basiselement (2) vorgesehen ist.

3. Portionskapsel (1) nach Anspruch 1 oder 2, **dadurch gekennzeichnet, dass** sie ein Filterelement (5) aufweist, das ein nicht gewebtes Material, insbesondere ein Filz-oder Vliesmaterial umfasst.

4. Verwendung einer Portionskapsel (1) nach einem der vorhergehenden Ansprüche zur Herstellung eines Heißgetränks.
